Europäisches Patentamt

European Patent Office

Office européen des brevets

(19)

(11) Veröffentlichungsnummer: **0 211 364**
**B1**

(12) **EUROPÄISCHE PATENTSCHRIFT**

(45) Veröffentlichungstag der Patentschrift: **16.05.90**

(21) Anmeldenummer: **86110345.5**

(22) Anmeldetag: **26.07.86**

(51) Int. Cl.⁵: **C 04 B 28/10,** C 04 B 40/06, C 04 B 41/00 // (C04B28/10, 22:10, 24:16)

(54) Trockenmischung für ein nichtexplosives Sprengmittel.

(30) Priorität: **03.08.85 DE 3527983**

(43) Veröffentlichungstag der Anmeldung: **25.02.87 Patentblatt 87/09**

(45) Bekanntmachung des Hinweises auf die Patenterteilung: **16.05.90 Patentblatt 90/20**

(84) Benannte Vertragsstaaten: **AT BE CH DE FR GB IT LI LU NL SE**

(56) Entgegenhaltungen:
EP-A-0 103 194
DE-A-3 217 773
US-A-2 279 262

CHEMICAL ABSTRACTS, Band 101, Nr. 22, November 1984, Seite 310, Zusammenfassung Nr. 197165r, Columbus, Ohio, US & JP-A-59-113 077

CHEMICAL ABSTRACTS, Band 101, Nr. 22, November 1984, Seite 310, Zusammenfassung Nr. 197162n, Columbus, Ohio, US & JP-A-59-75 976

(73) Patentinhaber: **SICOWA Verfahrenstechnik für Baustoffe GmbH & Co. KG**
**Handerweg 17**
**D-5100 Aachen (DE)**

(72) Erfinder: **Koslowski, Thomas, Dr.**
**Buschmühle 1**
**D-5100 Aachen (DE)**

(74) Vertreter: **Sparing Röhl Henseler Patentanwälte**
**European Patent Attorneys**
**Rethelstrasse 123**
**D-4000 Düsseldorf 1 (DE)**

(56) Entgegenhaltungen:
**CHEMICAL ABSTRACTS, Band 101, Nr. 6, August 1984, Seite 262, Zusammenfassung Nr. 42661a, Columbus, Ohio, US & JP-A-59-33 378**

**CHEMICAL ABSTRACTS, Band 103, Nr. 22, Dezember 1985, Seite 299, Zusammenfassung Nr. 182769h, Columbus, Ohio, US & DD-A-221 992**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Trockenmischung für ein nichtexplosives Sprengmittel, enthaltend Branntkalk in einer Menge von etwa 50 bis 90 Gewichtsteilen und Zusätze.

Derartige Sprengmittel werden zum Abbauen von Fels, beispielsweise in Steinbrüchen, bei tunnelarbeiten oder dergleichen, bei Abriß von feuerfesten Auskleidungen etwa im Ofenbau, oder von Beton, etwa von Brückenpfeilern, Fundamentierungen oder sonstigen Betonteilen, verwendet, indem die Trockenmischung mit Hilfe von Wasser angerührt und in entsprechende Bohrlöcher eingefüllt wird. Der als Treibmittel dienende Branntkalk expandiert in den Bohrlöchern und führt auf diese Weise zur Sprengung.

Bei derartigen Sprengmitteln besteht jedoch das Problem, daß keine größeren Mengen angemischt werden können, da das Sprengmittel sofort zu verarbeiten ist. Dementsprechend bestehen auch Transport- bzw. Förderprobleme.

Aus der EP—A—0 103 194 ist eine Trockenmischung für ein nichtexplosives Sprengmittel auf der Kalkbasis bekannt, bei dem die Hydratationsverzögerung durch Kaliumcarbonat und ein Oxycarbonsäurensalz erfolgt. Ein hierbei eingesetzter Verflüssiger ist lediglich zur Einsparung von Anmachwasser vorhanden. Bekannterweise haben Verflüssiger und Superverflüssiger auf die Hydratation von Zementen keinen oder nur einen sehr geringen Einfluß, weshalb die Gesamtmenge an den genannten Zusätzen und die Menge an zugesetztem Verflüssiger relativ gering sind. Es ergeben sich relativ geringe Verarbeitungszeiten in der Größenordnung von 10 bis 20 min. Zum Transportieren und Fördern reicht dies nicht aus. Kalk wird in nicht handelsüblicher Form stückig oder als Gries eingesetzt.

Aufgabe der Erfindung ist es, eine Trockenmischung für ein nichtexplosives Sprengmittel zu schaffen, die nach dem Anmischen mit Wasser nicht sofort zu verarbeiten ist, so daß größere Mengen angemischt werden können, die transportier- und förderbar sind.

Diese Aufgabe wird dadurch gelöst, daß als Zusätze ein leicht lösliches, anorganisches, die Entstehung von Adsorptionswärme hemmendes Salz in einer Menge von etwa 1 bis 10 Gewichtsteilen und ein pulverförmiger Superverflüssiger in einer Menge von 5 bis 25 Gewichtsteilen zusammen mit einem feinstteiligen Inertstoff in der Trockenmischung enthalten sind.

Diese Trockenmischung benötigt keinen Zement als Zusatz.

Als anorganisches Salz, das die Entstehung von Adsorptionswärme hemmt, eignet sich insbesondere Kaliumcarbonat, wodurch die Temperatur der angemachten Trockenmischung bei Verwendung von normalem Leitungswasser als Anmachwasser in der Regel unter 25°C bleibt. Als anorganisches Salz können ferner sehr gut lösliche Carbonate, wie Calciumhydrogencarbonat, wasserhaltige Magnesiumcarbonate oder Natriumcarbonat verwendet werden.

Als Superverflüssiger, der pulverförmig enthalten ist, kann etwa ein Naphthalinsulfonat oder ein modifiziertes anionisches Melaminharz verwendet werden. Die verflüssigende Wirkung des Superverflüssigers wird, wenn das Kalktreiben genügend in Gang gekommen ist, aufgehoben, und schließlich wird die Mischung betonhart und führt zur Sprengwirkung.

Die angemachte Trockenmischung braucht nicht sofort verarbeitet zu werden, sondern ermöglicht die Einstellung einer offenen Zeit bis zur Verarbeitung bis zu mehreren Stunden, so daß es möglich ist, auch große Mengen der Trockenmischung anzumachen und ferner mit einer Mörtelpumpe oder dergleichen zu fördern, bzw. in Bohrlöcher einzudrücken, was beispielsweise auch für den Untertagebereich bzw. nichtabwärtsgerichtete Bohrlöcher wichtig ist. Lufteinschlüsse müssen vermieden werden.

Es kann handelsüblicher Kalk eingesetzt werden, wobei insbesondere Hartbrand eingesetzt werden kann, der mit Weichbrand gemischt werden kann, wobei der Weichbrand aufgrund seiner größeren Reaktionsfähigkeit als "Zünder" für die Hartbrandreaktion dient. Es läßt sich auch Wasserkalk, hydraulischer Kalk sowie hochhydraulischer Kalk einsetzen.

Die Trockenmischung kann ferner einen Inertstoff als Stützkorn zur Ergänzung der Sieblinie enthalten, außerdem einen feinstteiligen Inertstoff zur Verbesserung des Wasserrückhaltevermögens, der zum Schließen der Porenräume in der angemachten Trockenmischung dient, sowie einen alkalischen Zusatz, der zum Beschleunigen der Kalkreaktion dient. Diese drei Funktionen erfüllt z.B. Schleifsand, der aus der Spiegelglasproduktion stammt und vorzugsweise in einer Menge von 5 bis 20 Gewichtsteilen enthalten ist, und dessen Körnung zu 100% unter 90 μm und zu 80% unter 40 μm liegt. Er verbessert nicht nur die Körnungslinie, sondern schließt auch die Porenräume in der angemachten Mischung durch sein Feinstkorn, verbessert hierdurch das Wasserrückhaltevermögen, so daß ein Verdursten des Kalks insbesondere in wasserabsorbierender Umgebung verhindert wird, begünstigt die Keimbildung durch die große Oberfläche und beschleunigt zugleich die Kalkreaktion, da er Alkalien enthält. Außerdem stellt er ein Stützkorn dar.

Anstelle von Schleifsand oder zusätzlich kann auch ein pulverförmiger Stoff mit relativ hohem spezifischem Gewicht enthalten sein, etwa Eisenpulver, Eisenoxidpulver oder Schwerspat, die ebenfalls in bezug auf die Kalkreaktion inert sind, jedoch zu einer hohen Frischrohdichte führen, was bei tiefen Bohrlöchern von Bedeutung ist.

Zur Verwendung in warmer Umgebung, etwa Untertage oder in warmen Ländern, kann eine Bremsung der Löschreaktion vorteilhaft sein, die mit Hilfe von Calciumsulfat zusammen mit einer die heterogene Keimbildung und das Kristallwachstum von Kalkhydrat hemmenden organischen Substanz vorweggenommen werden kann, wobei als organische Substanz etwa eine Oxycarbonsäure, insbesondere Zitronen-, Wein- und/ oder Glukonsäure, oder deren Salz oder eine Mischung hiervon und als Calciumsulfat Calciumsulfathalbhydrat, insbesondere Stuckgips, verwendet werden kann. Vgl. die deutschen Patentanmeldungen P 34 03 867.1 und P 34 38 620.3.

Außerdem ist es möglich, die angemachte, in die entsprechenden Bohrlöcher eingefüllte Mischung mit Hilfe eines eingesteckten Heizdrahtes zu erwärmen und hierdurch zu aktivieren, um die Sprengzeit zu verkürzen.

Beispiel 1

Zur Anwendung bei einer Umgebungstemperatur zwischen 20 bis 30°C kann eine Trockenmischung aus 895 g gemahlenem Hartband, 25 g $K_2CO_3$, 120 g Superverflüssiger (modifiziertes, anionisches Melaminharz in Pulverform), 168 g Schleifsand, 25 g Stuckgips und 6 g Zitronensäuremonohydrat verwendet werden.

Beispiel 2

Zur Anwendung bei einer Umgebungstemperatur von 15 bis 25°C kann eine Trockenmischung aus 1000 g Hartbrand, 22,5 g $K_2CO_3$, 120 Superverflüssiger und 100 g Schleifsand verwendet werden.

Beispiel 3

Zur Anwendung bei einer Umgebungstemperatur von 10 bis 20°C kann eine Trockenmischung aus 800 g Hartbrand, 200 g Weichbrand, 15 g $K_2CO_3$, 160 g Superverflüssiger und 50 g Schleifsand verwendet werden.

Beispiel 4

Zur Anwendung bei einer Umgebungstemperatur von 5 bis 15°C kann eine Trockenmischung aus 650 g Hartbrand, 260 g Weichbrand, 20 g $K_2CO_3$, 150 g Superverflüssiger und 185 g Schleifsand verwendet werden.

Eine derartige Trockenmischung wird mit 370 bis 375 g Wasser angemacht, ist dann innerhalb von etwa 2 Stunden zu verarbeiten und führt zu einer sehr großen Sprengkraft.

**Patentansprüche**

1. Trockenmischung für ein nichtexplosives Sprengmittel, enthaltend Branntkalk in einer Menge von etwa 50 bis 90 Gew.-Teilen und Zusätze, dadurch gekennzeichnet, daß als Zusätze ein leicht lösliches, anorganisches, die Entstehung von Adsorptionswärme hemmendes Salz in einer Menge von etwa 1 bis 10 Gew.-Teilen und ein pulverförmiger Superverflüssiger in einer Menge von 5 bis 25 Gew.-Teilen zusammen mit einem feinstteiligen Inertstoff enthalten sind.

2. Trockenmischung nach Anspruch 1, dadurch gekennzeichnet, daß das anorganische Salz in einer Menge von 1,5 bis 4 Gew.-Teilen vorhanden ist.

3. Trockenmischung nach Anspruch 1 oder 2, dadurch gekennzeichnet, daß ein alkalihaltiger Zusatz enthalten ist.

4. Trockenmischung nach einem der Ansprüche 1 bis 3, dadurch gekennzeichnet, daß Schleifsand, vorzugsweise in einer Menge von 5 bis 20 Gew.-Teilen, als feinstteiliger Inertstoff enthalten ist.

5. Trockenmischung nach einem der Ansprüche 1 bis 4, dadurch gekennzeichnet, daß ein pulverförmiger Stoff mit relativ hohem spezifischem Gewicht enthalten ist.

6. Trockenmischung nach Anspruch 5, dadurch gekennzeichnet, daß ein eisenhaltiges Pulver oder Bariumsulfat enthalten ist.

7. Trockenmischung nach einem der Ansprüche 1 bis 5, dadurch gekennzeichnet, daß Calciumsulfat zusammen mit einer die heterogene Keimbildung und das Kristallwachstum von Kalkhydrat hemmenden organischen Substanz enthalten sind.

8. Trockenmischung nach Anspruch 7, dadurch gekennzeichnet, daß die organische Substanz eine Oxycarbonsäure, insbesondere Zitronen-, Wein- und/oder Glukonsäure, und/oder deren Salz(e) ist.

9. Trockenmischung nach Anspruch 7 oder 8, dadurch gekennzeichnet, daß das Calciumsulfat Calciumsulfathalbhydrat, insbesondere Stuckgips, ist.

10. Trockenmischung nach einem der Ansprüche 1 bis 9, dadurch gekennzeichnet, daß das anorganische Salz Kaliumcarbonat ist.

11. Trockenmischung nach einem der Ansprüche 1 bis 10, dadurch gekennzeichnet, daß der Superverflüssiger Naphthalinsulfonat oder ein modifiziertes, anionisches Melaminharz ist.

12. Trockenmischung nach einem der Ansprüche 1 bis 11, dadurch gekennzeichnet, daß der Branntkalk aus einer Mischung aus hoch und wenig reaktivem Branntkalk, vorzugsweise Hartbrand und Weichbrand, besteht.

**Revendications**

1. Mélange sec pour un explosif non détonant contenant de la chaux vive en une quantité d'environ 50 à 90 parties en poids et des additifs, caractérisé par le fait qu'à titre d'additifs sont contenus dans le mélange un sel facilement soluble, inorganique, inhibant la génération de chaleur d'adsorption, en une quantité d'environ 1 à 10 parties en poids et un agent super-fluidifiant sous forme de poudre en une quantité allant de 5 à 25 parties en poids combiné à un matériau inerte à particules ultrafines.

2. Mélange sec selon la revendication 1, caractérisé par le fait que le sel inorganique est présent en une quantité allant de 1,5 à 4 parties en poids.

3. Mégange sec selon la revendication 1 ou 2, caractérisé par la présence d'un additif contenant des alcalis.

4. Mélange sec selon l'une des revendications 1 à 3, caractérisé par la présence de sable à polir, de préférence en une quantité allant de 5 à 20 parties en poids, constituant le matériau inerte à particules ultrafines.

5. Mélange sec selon l'une des revendications 1 à 4, caractérisé par la présence d'un matériau sous forme de poudre ayant une densité relativement élevée.

6. Mélange sec selon la revendication 5, caractérisé par la présence d'une poudre contenant du fer ou du sulfate de baryum.

7. Mélange sec selon l'une des revendications 1 à 5, caractérisé par la présence de sulfate de calcium associé à une substance minérale inhibant la formation hétérogène de germes et la croissance de cristaux d'hydrate de chaux.

8. Mélange sec selon la revendication 7, caractérisé par le fait que la substance minérale est un acide oxycarboxylique, en particulier l'acide citrique, l'acide tartrique et/ou l'acide gluconique et/ou leurs sels.

9. Mélange sec selon la revendication 7 ou 8, caractérisé par le fait que le sulfate de calcium est le sulfate de calcium hémi-hydraté, en particulier du stuc.

10. Mélange sec selon l'une des revendications 1 à 9, caractérisé par le fait que le sel inorganique est le carbonate de potassium.

11. Mélange sec selon l'une des revendications 1 à 10, caractérisé par le fait que l'agent superfluidifiant est un naphtalène sulfonate ou une résine de mélamine anionique modifiée.

12. Mélange sec selon l'une des revendications 1 à 11, caractérisé par le fait que la chaux vive est constituée d'un mélange de chaux vives fortement et faibles réactives, de préférence à cuisson forte et à cuisson modérée.

## Claims

1. A dry mixture for a non-explosive demolition agent, containing quicklime in a quantity of about 50 to 90 parts by weight and additives, characterised in that the mixture contains as additives a readily soluble inorganic salt inhibiting the formation of heat of adsorption, said salt being contained in a quantity of about 1 to 10 parts by weight, and a pulverulent super-liquefier in a quantity of 5 to 25 parts by weight together with a very finely divided inert substance.

2. A dry mixture according to Claim 1, characterised in that the inorganic salt is present in a quantity of 1.5 to 4 parts by weight.

3. A dry mixture according to Claim 1 or 2, characterised in that the mixture contains an alkali-containing additive.

4. A dry mixture according to any one of Claims 1 to 3, characterised in that the mixture contains grinding sand, preferably in a quantity of 5 to 20 parts by weight, as a very finely divided inert substance.

5. A dry mixture according to any one of Claims 1 to 4, characterised in that the mixture contains a pulverulent substance having a relatively high specific gravity.

6. A dry mixture according to Claim 5, characterised in that the mixture contains an iron-containing powder or barium sulphate.

7. A dry mixture according to any one of Claims 1 to 5, characterised in that the mixture contains calcium sulphate together with an organic substance which inhibits heterogeneous nucleation and the crystal growth of hydrate of lime.

8. A dry mixture according to Claim 7, characterised in that the organic substance is a hydroxycarboxylic acid, more particularly citric, tartaric and/or gluconic acid, and/or salt(s) thereof.

9. A dry mixture according to Claim 7 or 8, characterised in that the calcium sulphate is calcium sulphate hemihydrate, more particularly plaster of Paris.

10. A dry mixture according to any one of Claims 1 to 9, characterised in that the inorganic salt is potassium carbonate.

11. A dry mixture according to any one of Claims 1 to 10, characterised in that the super-liquefier is naphthalene sulphonate or a modified anionic melamine resin.

12. A dry mixture according to any one of Claims 1 to 11, characterised in that the quicklime consists of a mixture of highly reactive and low-reactivity quicklime, preferably hard burnt quicklime and soft burnt quicklime.